# FASCICULE DE BREVET EUROPEEN

(11) **EP 3 682 601 B1**
(45) Date de publication et mention de la délivrance du brevet: **30.03.2022**
(21) Numéro de dépôt: 18783033.6
(22) Date de dépôt: 12.10.2018
(51) Int. Cl.: H04L 12/28, H04L 12/707

(54) **ROUTAGE DE DONNÉES DANS UNE PASSERELLE RÉSIDENTIELLE METTANT EN OEUVRE L'AGRÉGATION DE LIENS**
DATENUMLENKUNG IN EINER ANLAGE AUF EINEM KUNDENGELÄNDE UNTER VERWENDUNG VON VERBINDUNGSAGGREGATION
DATA ROUTING IN A CUSTOMER PREMISES EQUIPMENT USING LINK AGGREGATION

(30) Priorité: 17.10.2017 FR 1759750
(43) Date de publication de la demande: 22.07.2020
(73) Titulaire: Sagemcom Broadband SAS, 92500 Rueil-Malmaison (FR)
(72) Inventeur: BATARDIÈRE, Simon, 92500 Rueil Malmaison (FR)
(74) Mandataire: Cabinet Camus Lebkiri
(86) Numéro de dépôt international: PCT/EP2018/077942
(87) Numéro de publication internationale: WO 2019/076770

(56) Documents cités:
- WO-A1-2007/116411
- US-A1- 2011 066 875
- US-A1- 2017 063 668
- US-A1- 2017 230 280

## Description

### Domaine Technique

La présente invention se rapporte de manière générale au routage de données dans une passerelle résidentielle mettant en œuvre l'agrégation de liens, pour l'établissement d'une unique connexion multi-chemins entre deux équipements informatiques ou équipements de réseau informatique.

Elle concerne plus particulièrement un procédé de routage de données, et un dispositif et un produit programme d'ordinateur associé, pour utilisation dans une passerelle résidentielle en mettant en œuvre l'agrégation de liens.

L'invention trouve des applications, en particulier, dans les passerelles résidentielles qui relient les réseaux informatiques domestiques à Internet.

### Arrière-plan Technologique

L'agrégation de liens (aussi appelée « *Bonding* ») est une technique utilisée dans les réseaux informatiques comme les réseaux Ethernet, pour le routage de paquets IPv4 (« *Internet Protocol version 4* ») ou IPv6 (« *Internet Protocol version 6* »), par exemple. Elle peut être définie comme l'agrégation de plusieurs interfaces réseaux en une interface logique de sorte à augmenter la bande passante et apporter de la redondance pour une connexion entre deux équipements déterminés. Par exemple, elle peut être utilisée pour augmenter le débit d'une connexion TCP (« *Transmission Control Protocol* ») dans un réseau étendu ou WAN (« *Wide Area Network* », par opposition au réseau local ou LAN).

Dans les réseaux IP (« *Internet Protocol* »), elle est le plus souvent mise en place entre les ports de commutateurs Ethernet dans le réseau Internet, ou entre des cartes Ethernet d'ordinateurs sous Linux, Unix ou Windows. Dans ce contexte, elle permet le regroupement de plusieurs ports réseau et de les utiliser comme s'il s'agissait d'un seul. Elle répond à deux problèmes dans les réseaux, à savoir la limitation en bande passante entre deux équipements, d'une part, et l'absence de redondance des liens, d'autre part. L'agrégation de liens permet en effet d'accroître le débit au-delà des limites d'un seul lien, et éventuellement de faire en sorte que les autres ports prennent le relais si un lien tombe en panne. Toutefois, l'agrégation est un concept général qui peut être mis en œuvre dans chacune des trois couches inférieures du modèle OSI (de l'anglais « *Open Systems Interconnection* »)*.*

Dans le contexte de la présente invention, l'agrégation de différents liens permet d'augmenter le débit d'une « passerelle résidentielle » en utilisant simultanément les capacités d'une pluralité de liens DSL (« *Digital Subscriber Line* »), respectivement associés à une pluralité de passerelles résidentielles et via lesquels chaque passerelle résidentielle peut communiquer avec l'Internet. L'agrégation utilise d'autres liens établis entre les passerelles résidentielles. Typiquement, les liens DSL vers l'Internet sont établis à travers une interface Ethernet de la passerelle résidentielle, et un lien avec une autre passerelle résidentielle est établi par exemple par une interface Wi-Fi (normes IEEE 802.11 ou ISO/CEI 8802-11 ), bien que ces exemples ne soient pas exclusifs.

Par « passerelle résidentielle » ou CPE (de l'anglais « *Customer-Premises Equipment* »), on entend un équipement matériel terminal qui se trouve dans le site d'un client (particulier ou entreprise), et qui est raccordé d'une part à une boucle locale LAN et d'autre part à l'infrastructure d'un fournisseur d'accès à Internet (FAI) dans un point de présence ou POP (de l'anglais « *Point Of Presence* »). C'est l'équipement terminal du côté du client, qui est utilisé pour se connecter au réseau Internet. Cet équipement est aussi communément appelé une « box ».

### Art Antérieur

L'agrégation de différents liens est en soi une technique déjà connue et déployée. De nombreuses technologies permettent de la mettre en œuvre, comme par exemple l'ensemble d'extensions de la spécification TCP connu sous l'appellation « Multipath TCP» ou MPTCP, ou bien l'encapsulation générique de routage ou GRE (« *Generic Routing Encapsulation*»). L'idée de base derrière l'agrégation de lien telle qu'elle est mise en œuvre,par exemple, dans le protocole MPTCP défini dans la RFC 6824 de l'lETF, est d'établir un lien entre un hôte source et un hôte destination et non plus entre deux interfaces comme c'est le cas dans le protocole de contrôle de transmission (TCP) standard.

Le MPTCP est un effort continu du groupe de travail de l'IETF *« Internet Engineering Task Force* ») qui vise à permettre à TCP d'utiliser plusieurs chemins d'accès afin de maximiser l'utilisation des ressources et l'augmentation de la redondance tout en restant compatible avec les équipements actuels (firewall, NAT, ...) de l'Internet. Un client peut s'appuyer sur ce protocole pour se connecter à un même hôte de destination via plusieurs connexions sur des adaptateurs réseau différents, créant ainsi des connexions de données fiables et efficaces entre l'hôte source et l'hôte de destination qui interagissent avec les infrastructures réseau existantes. MPTCP permet ainsi d'établir et d'utiliser une même et unique connexion TCP au travers de plusieurs interfaces réseau. Le cas typique d'utilisation consiste à décharger les réseaux 4G (ou LTE, de l'anglais « *Long Term Evolution* », à savoir la norme mondiale de services sans fil de quatrième génération) via le Wi-Fi, ce qui permet d'utiliser une borne ou point d'accès Wi-Fi public (« *hot spot* ») lorsque le terminal est à portée radio de cette borne, et de repasser de façon transparente exclusivement sur le réseau 4G dès que le terminal n'est plus à portée. Une autre application est le partage de plusieurs liens (par exemple, deux câbles Ethernet) pour un serveur de manière transparente.

L'intérêt de MPTCP est en effet d'être totalement transparent pour les applications. Contrairement à la liaison de canaux Ethernet utilisant l'agrégation de liens selon le protocole IEEE 802.3ad LACP (« *Link Aggregation Control Protocol* »)*,* par exemple, Multipath TCP peut équilibrer une seule et unique connexion TCP à travers de multiples interfaces. Il suffit d'une implémentation à la fois du côté client et du côté serveur pour que ce soit possible. En janvier 2013, l'IETF a publié les spécifications de Multipath TCP comme une norme expérimentale dans la RFC 6824.

GRE est quant à lui un protocole de mise en tunnel qui permet d'encapsuler n'importe quel paquet de la couche réseau. Le paquet d'origine est l'information utile (« *payload* ») du paquet final. Par exemple, les serveurs de tunnel qui chiffrent les données peuvent utiliser GRE à travers Internet pour sécuriser les réseaux privés virtuels. Le protocole GRE correspond au code 47 dans le champ « protocol » dans l'en-tête IP d'un paquet IPv4, ou bien le champ « next header » du dernier entête d'un paquet IPv6.

Toutes ces technologies demandent d'avoir un point d'agrégation déployé dans le cœur de réseau, afin de reconstituer dans le réseau le flux de données à partir des sous-flux respectivement reçus par chacun des liens agrégés.

Une nouvelle application du concept d'agrégation de liens, actuellement encore en cours d'étude, consisterait à utiliser le hot spot Wi-Fi public d'un autre CPE du même fournisseur d'accès et se trouvant à portée radio pour ajouter un lien WAN supplémentaire éligible à l'agrégation dans un CPE déterminé. Afin d'augmenter son débit, ce CPE pourrait ainsi basculer son Wi-Fi en mode station, se connecter au Wi-Fi public de l'autre CPE à portée, et ainsi profiter de la bande passante de ce dernier. Et ce, tout en continuant de diffuser lui-même son propre point d'accès pour le Wi-Fi public.

Il peut cependant se poser un problème qui est la création d'une boucle si les deux CPE mettent en œuvre cette technologie.

Par exemple, afin de profiter des avantages de l'agrégation de lien, un premier CPE envoie un paquet à un second CPE via le Wi-Fi public. Le second CPE est supposé le router vers le WAN. Cependant, s'il met également en œuvre les techniques d'agrégation de liens, et en application de l'algorithme de sélection du lien parmi ceux disponibles qu'il exécute, il peut choisir le Wi-Fi public allant vers le premier CPE. Auquel cas le premier CPE reçoit son propre paquet. Une boucle a ainsi été créée, qui présente deux inconvénients. Premièrement, la boucle peut continuer un nombre X de fois, en fonction des algorithmes de sélection de lien exécuté dans chacun des CPE, ce qui introduit de la latence voir des pertes de paquets, ainsi que de la charge Wi-Fi inutile. Deuxièmement, les technologies d'aujourd'hui MPTCP, GRE) rajoutent un entête à chaque paquet pour faire du bonding, ce qui a pour conséquence de réduire la MTU (« *Maximum Transmission Unit* ») et de provoquer de la fragmentation IP. Ajouter des encapsulations inutiles amplifie ce problème.

Il existe différents protocoles qui permettent d'éviter la formation de boucles dans un réseau, comme STP (« *Spanning Tree Protocol* ») et LACP (« *Link Aggregation Control Protocol* ») en couche 2, ou OSPF (« *Open Shrotest Path First* »), IS-IS (« *Intermediate System to Intermediate System »),* BGP («*Border Gateway ProtocoI*»), EIGRP (« *Enhanced Interior Gateway Routing Protocol* »), DSDV (« *Destination Sequence Distance Vector* ») et Babel en couche 3. De plus il existe aussi des techniques qui permettent d'éviter les boucles dans un réseau. Par exemple un bridge ne va jamais retransmettre un paquet sur l'interface par lequel il l'a reçu. D'autres techniques sont connues par exemple de la demande de brevet US2017063668 A1. Cependant ces protocoles et ces techniques ne traitent pas du problème de bouclage dans le cadre d'une sélection de voie d'hybridation.

### Résumé de l'Invention

L'invention permet de résoudre un problème posé par l'agrégation de lien ou « bonding », qui est la création d'une boucle si les deux CPE, client et destination, mettent en œuvre cette technologie.

L'invention vise à supprimer, ou du moins atténuer, tout ou partie des inconvénients de l'art antérieur précités.

A cet effet, un premier aspect de l'invention propose un procédé de routage de données reçues d'un premier équipement de réseau dans un second équipement de réseau, chacun desdits premier et second équipements de réseau comprenant un moteur d'agrégation de liens mettant en œuvre une technique d'agrégation de liens en utilisant les mêmes règles d'agrégation pour sélectionner l'un parmi au moins un premier et un second liens de sortie participant à l'agrégation de lien dans ledit équipement de réseau avec :
- un lien de sortie vers l'autre équipement de réseau; et
- au moins un autre lien de sortie qui est capable d'atteindre un point d'agrégation dans le réseau,
le procédé comprenant les étapes suivantes, mises en œuvre dans le second équipement réseau :
i. réception de données arrivant du premier équipement de réseau ;
ii. détection de si les données ont déjà subi ou non une opération d'agrégation de liens dans le premier équipement de réseau ou en amont, sur la base de marqueurs présents dans les données ; puis,
iii. sélection d'un lien de sortie parmi tous les liens de sortie du second équipement de réseau participant à l'agrégation de lien dans ledit second équipement de réseau si les données n'ont pas déjà subi d'agrégation de liens, ou sélection du lien de sortie parmi tous les liens de sortie du second équipement réseau participant à l'agrégation de liens dans ledit second équipement de réseau sauf le lien de sortie vers le premier équipement réseau si les données ont déjà subi une agrégation de liens ; et,
iv. transmission des données sur le lien de sortie sélectionné.

Avantageusement, le procédé selon l'invention permet de surmonter les problèmes selon l'art antérieur susmentionnés.

Des modes de mise en œuvre comprennent l'utilisation d'un moteur d'agrégation du second équipement de réseau pour sélectionner le lien de sortie dudit second équipement de réseau si ledit second équipement de réseau comprend plus d'un lien de sortie autre que le lien de sortie vers le premier équipement de réseau.

On peut aussi prévoir, dans certaines réalisations, que si le second équipement de réseau ne comprend qu'un unique lien de sortie autre que le lien de sortie vers le premier équipement réseau, alors l'étape de transmission des données comprend la transmission des données directement sur ledit unique lien de sortie autre que le lien de sortie vers le premier équipement de réseau, sans utilisation du moteur d'agrégation du second équipement de réseau.

Lorsque le premier équipement de réseau et le second équipement réseau utilisent le protocole MPTCP pour l'agrégation de liens, la détection de si les données ont déjà subi ou non une opération d'agrégation de liens dans le premier équipement de réseau ou en amont peuvent par exemple comprendre le test de la présence de l'option TCP 30 « *multipath* TCP » dans les données reçues dans le second équipement de réseau.

En variante, lorsque le premier équipement réseau et le second équipement réseau utilisent des tunnels GRE pour l'agrégation de liens, la détection de si les données ont déjà subi ou non une opération d'agrégation de liens dans le premier équipement de réseau ou en amont comprend le test de si le champ « protocol » dans l'entête IP d'un paquet de données IPv4 ou le champ « next header » du dernier entête d'un paquet de données IPv6, compris dans les données reçues du premier équipement de réseau, est égal à 47.

Dans le cas des deux modes de mises en œuvre ci-dessus, la détection de si les données ont déjà subi ou non une opération d'agrégation de liens dans le premier équipement de réseau ou en amont peut comprendre, en outre, une vérification de l'interface par lequel les données sont rentrées dans le second équipement réseau pour lever des limitations liées au fait que MPTCP ou GRE, respectivement, puisse avoir été utilisé dans le premier équipement de réseau ou en amont dans un autre contexte que l'agrégation de liens.

Dans d'autres modes de mise en œuvre, la détection de si les données ont déjà subi ou non une opération d'agrégation de liens dans le premier équipement de réseau ou en amont peut comprendre la comparaison de l'adresse IP de destination d'un paquet de données compris dans les données reçues du premier équipement de réseau avec des adresses IP contenues dans une liste d'adresses IP respectives d'une pluralité de points d'agrégation du réseau de données.

Dans d'autres exemples encore, la détection de si les données ont déjà subi ou non une opération d'agrégation de liens dans le premier équipement de réseau ou en amont peut comprendre le test, en outre, d'un identifiant, connu par le second équipement de réseau, du premier équipement de réseau et/ou d'un autre équipement en amont dudit premier équipement de réseau par lequel les données ont transité avant d'atteindre le second équipement de réseau.

Par exemple, l'identifiant du premier équipement de réseau comprend une adresse physique dans le réseau qui est propre audit premier équipement de réseau, et est connue du second équipement de réseau soit de manière statique soit parce qu'elle est communiquée audit second équipement de réseau par un protocole de gestion du réseau, et le test de l'identifiant peut alors comprendre la comparaison avec un intervalle d'adresses physiques connues du second équipement de réseau.

Dans d'autres modes de réalisations, dans lesquels les données sont reçues du premier équipement de réseau via un interface Wi-Fi IEEE 802.11 du second équipement de réseau, la détection de si les données ont déjà subi ou non une opération d'agrégation de liens dans le premier équipement de réseau ou en amont peut comprendre le test, en outre, d'une valeur spécifique dans l'attribut numéro 26 d'une trame de type *probe request*

Enfin, lorsque le second équipement de réseau joue le rôle de serveur DHCP vis-à-vis du premier équipement de réseau et les données étant reçues par ledit second équipement de réseau via un réseau Wi-Fi public, la détection de si les données ont déjà subi ou non une opération d'agrégation de liens dans le premier équipement de réseau peut comprendre le test d'une option DHCP avec une valeur prédéfinie connue du premier équipement de réseau et du second équipement de réseau, qui est insérée par le premier équipement de réseau lorsque les données font l'objet d'une agrégation de liens dans le premier équipement de réseau.

Dans un second aspect, l'invention concerne un dispositif de routage de données reçues d'un premier équipement de réseau dans un second équipement de réseau, chacun desdits premier et second équipements de réseau comprenant un moteur d'agrégation de liens mettant en œuvre une technique d'agrégation de liens en utilisant les mêmes règles d'agrégation pour sélectionner l'un parmi au moins un premier et un second liens de sortie participant à l'agrégation de lien dans ledit équipement de réseau avec :
- un lien de sortie vers l'autre équipement de réseau; et
- au moins un autre lien de sortie qui est capable d'atteindre un point d'agrégation dans le réseau,
le dispositif comprenant, dans le second équipement de réseau:
i. des moyens pour la réception de données arrivant du premier équipement de réseau ;
ii. des moyens pour la détection de si les données ont déjà subi ou non une opération d'agrégation de liens dans le premier équipement de réseau ou en amont, sur la base de marqueurs présents dans les données ;
iii. des moyens pour la sélection d'un lien de sortie parmi tous les liens de sortie du second équipement de réseau participant à l'agrégation de lien dans ledit second équipement de réseau si les données n'ont pas déjà subi d'agrégation de liens, ou sélection du lien de sortie parmi tous les liens de sortie du second équipement de réseau participant à l'agrégation de liens dans ledit second équipement de réseau sauf le lien de sortie vers le premier équipement de réseau si les données ont déjà subi une agrégation de liens ; et,
iv. des moyens pour la transmission des données sur le lien de sortie sélectionné.

Dans un troisième aspect, l'invention a également pour objet une passerelle résidentielle comprenant un dispositif selon le deuxième aspect.

Dans un quatrième aspect, l'invention a encore pour objet un produit "programme d'ordinateur" chargeable directement dans la mémoire interne d'un ordinateur numérique, comprenant des portions de code de logiciel qui, lorsque ledit programme est exécuté par un ordinateur, conduisent celui-ci à mettre en œuvre toutes les étapes du procédé selon le premier aspect plus haut. Plus particulièrement, le produit programme d'ordinateur comprend une ou plusieurs séquences d'instructions stockées sur un support de mémoire lisible par une machine comprenant un processeur, lesdites séquences d'instructions étant adaptées pour réaliser toutes les étapes du procédé selon le premier aspect de l'invention lorsque le programme est lu dans le support de mémoire et exécuté par le processeur.

Un cinquième aspect l'invention concerne enfin un support d'enregistrement de données lisible par une machine comprenant un processeur (i.e., un ordinateur), comprenant le programme selon le quatrième aspect. Un tel support d'enregistrement peut être un support d'enregistrement optique tel qu'un CDrom ou un DVDrom, un support d'enregistrement magnétique tel qu'un disque dur d'ordinateur, une mémoire électronique lisible électriquement telle qu'une EPROM une EEPROM, une mémoire DRAM, une mémoire Flash, etc.

### Brève Description des Dessins

D'autres caractéristiques et avantages de l'invention apparaîtront encore à la lecture de la description qui va suivre. Celle-ci est purement illustrative et doit être lue en regard des dessins annexés sur lesquels :
- la Figure 1 est un schéma fonctionnel montrant un exemple de passerelle résidentielle mettant en œuvre de l'agrégation de deux liens pour la communication entre un réseau domestique et Internet, par exemple ;
- les Figures 2A-2C illustrent les différents chemins que peuvent suivre les données entre la passerelle résidentielle de la Figure 1 et Internet lorsqu'une autre passerelle résidentielle, mettant également en œuvre l'agrégation de liens, peut être atteinte par les données dans le cadre de l'agrégation de lien ;
- les Figures 3A-3D sont des schémas illustrant différentes configurations susceptibles de donner lieu à la formation de boucles entre deux passerelles résidentielles, ou plus, comme la passerelle résidentielle de la Figure 1 ;
- la Figure 4 est un schéma simplifié d'un autre exemple de passerelle résidentielle avec plus de deux liens éligibles à l'agrégation de liens ; et,
- La Figure 5 est un diagramme d'étapes qui illustre des modes de mise en œuvre du procédé de routage.

### Description détaillée de modes de réalisation

Dans la description de modes de réalisation qui va suivre et dans les Figures des dessins annexés, les mêmes éléments ou des éléments similaires portent les mêmes références numériques aux dessins.

Comme il a été exposé en introduction, différentes technologies utilisent le concept de l'agrégation de liens entre des équipements d'un réseau (par exemple des commutateurs ou routeurs), ou entre un appareil (par exemple un ordinateur) et un réseau, afin notamment d'accroître le débit au-delà des limites qui sont atteintes avec un seul lien. Ces techniques existantes peuvent être mises en œuvre dans chacune des trois couches inférieures du modèle OSI.

Il y a par exemple l'agrégation de liens Ethernet physiques via le « *Channel Bonding* » entre deux routeurs d'un réseau, que la couche réseau du modèle OSI ne voit que comme un seul canal logique de communication. Un autre exemple est donné par le partage de plusieurs liens (par exemple, deux câbles Ethernet) pour la connexion d'un ordinateur avec un serveur de manière transparente. Sur un réseau sans fil, selon un autre exemple, un équipement peut combiner plusieurs plages de fréquence en une seule, plus étendue. Ainsi par exemple, en IEEE 802.11n, il est défini un mode de fonctionnement avec une plage de fréquences s'étendant sur 40 MHz. Ce canal unique utilise deux bandes de 20 MHz (i.e., deux porteuses) adjacentes. Le terme d'agrégation de porteuses est alors aussi utilisé. Un autre exemple, encore, est l'agrégation d'un lien 4G et d'un lien Wi-Fi au sein d'un terminal mobile (téléphone mobile ou tablette, par exemple). Egalement, au sein d'une passerelle résidentielle (box), on connaît l'agrégation d'un lien DSL comme un lien Ethernet et d'un lien radio comme un lien 3G / 4G du terminal mobile de l'abonné à ces deux services.

L'agrégation de deux liens DSL de deux passerelles résidentielles de deux abonnés d'un même fournisseur d'accès à Internet via une connexion Wi-Fi établie entre ces deux équipements lorsqu'ils se trouvent à portée radio l'un de l'autre, peut être regardée comme une extension nouvelle des exemples ci-dessus. Un cas d'usage envisageable est la situation dans laquelle deux telles boxes respectivement installées dans deux bâtiments voisins, par exemple deux maisons d'habitation, et ayant chacun un lien Ethernet permettant de se connecter à des serveurs du réseau Internet, sont à portée radio l'une de l'autre si bien qu'elles peuvent communiquer via le Wi-Fi. Le lien Ethernet de l'un des abonnés peut alors être agrégé avec celui de son voisin, via la connexion Wi-Fi entre les deux boxs.

Toutefois, dans un tel contexte, éventuellement élargi à plus de deux passerelles résidentielles à portée les unes des autres, il a été identifié un risque de création de boucles si aucune précaution n'est prise, ainsi qu'il a été exposé en introduction de la présente description. Des modes de réalisation de l'invention apportent une solution pour éliminer ou du moins réduire ce risque de manière significative.

A titre d'exemple non limitatif, la présente description sera donnée ci-après en référence à un équipement de réseau qui est une passerelle résidentielle (i.e., une box). Les passerelles résidentielles jouent aujourd'hui un rôle important en reliant les réseaux domestiques à Internet. Les boxes considérées ici possèdent, chacune, une interface pour la connexion au réseau domestique de l'utilisateur correspondant, à savoir un réseau local (LAN). Elles possèdent aussi chacune une ou plusieurs autres interfaces, dont au moins une interface pour la communication avec une autre box similaire, et au moins une autre interface pour communiquer avec l'Internet ou tout autre réseau étendu (WAN).

Chaque interface de la box est bidirectionnelle : elle présente un lien d'entrée et un lien de sortie. Les termes « entrée » et « sortie » sont ici utilisés en référence à l'échange de données du point de vue de la box. Dans le sens montant des données (pour le transfert de données du LAN vers le WAN), le lien d'entrée de l'interface LAN et le lien de sortie de l'interface WAN sont utilisés. Pour un transfert de données dans le sens descendant (du WAN vers le LAN), c'est l'inverse : le lien d'entrée de l'interface WAN et le lien de sortie de l'interface LAN sont utilisés.

Dans un exemple non limitatif, une interface au moins a au moins un lien (un lien d'entrée ou un lien de sortie, ou les deux) qui est « ouvert », c'est-à-dire librement accessible par des tiers. C'est par les liens d'entrée et de sortie de cette interface que la box peut communiquer avec une box similaire.

Il peut s'agir notamment d'un lien vers un réseau public, par exemple un lien vers un réseau sans fil.

Des exemples de réseaux sans fil sont, notamment :
- les réseaux de téléphonie mobile, publics ou professionnels, comme le réseau public GSM 3G / 4G (LTE) ;
- des réseaux locaux sans fils (WLAN, de l'anglais « Wireless Local Area Network ») comme le Wi-Fi (802.11) ou hiperLAN 2 (« *HIgh Performance Radio LAN 2.0 »)* ; ou encore,
- des réseaux personnels sans fil appelés également réseaux individuels sans fils ou réseau domotique sans fils et notés WPAN (pour « *Wireless Personal Area Network* »), d'une faible portée de l'ordre de quelques dizaines mètres, comme ZigBee (aussi connu sous le nom IEEE 802.15.4) ou Bluetooth (aussi connu sous le nom IEEE 802.15.1) ;
- etc.

Mais il peut aussi s'agir d'un lien physique (filaire par exemple) librement accessible par des équipements tiers, comme un lien PCL (« Courants Porteurs en Ligne ») sur le réseau d'alimentation électrique d'une habitation, d'un immeuble voire d'un quartier, ou autre (voir par exemple IEEE 1901).

Egalement, le lien entre les deux boxes n'est pas forcément un lien ouvert au public au sens large. Il peut s'agit d'un lien Wi-Fi établi entre deux abonnés qui décident de partager leurs ressources pour l'accès à un réseau comme Internet, par exemple deux voisins habitants dans une même rue ou dans le même quartier d'une ville ou d'un village, et qui s'échangent des codes d'accès à cet effet. Egalement, le lien entre les deux équipements de réseau, par le Wi-Fi ou autre, peut être défini par défaut entre deux passerelles résidentielles fournies par un même fournisseur d'accès à Internet (FAI), qui y voit là la possibilité d'étendre la qualité de service (QoS) de manière transparente pour chaque abonné.

De préférence, un lien d'entrée et un lien de sortie au moins sont de tels liens « ouverts ». Il est bien entendu que l'invention ne se limite pas, toutefois, à ces exemples et peut s'appliquer à tout type d'équipement avec différentes combinaisons d'interfaces en nombre égal ou supérieur à deux, parmi lesquelles des interface Ethernet, CPL, Wi-Fi, 3G / 4G, etc. du moment qu'elles offrent des liens respectifs vers Internet susceptibles d'être agrégés via un lien entre deux équipements, pour augmenter le débit de chaque équipement (ou de l'un au moins de tels équipements) lors de la connexion à l'Internet ou à un autre réseau étendu (WAN), par exemple.

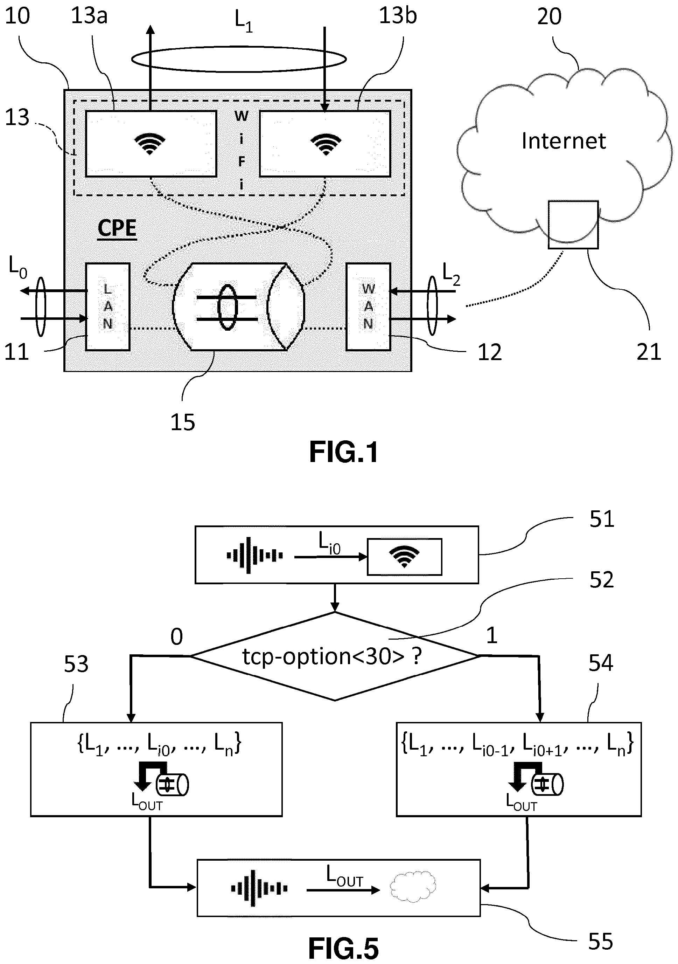

En référence au schéma de la Figure 1, un exemple de telle passerelle résidentielle 10 (CPE) peut comprendre une première interface Ethernet 11 pour communiquer avec un réseau local (LAN) non représenté, une seconde interface Ethernet 12 pour communiquer avec un réseau étendu (WAN) tel que l'Internet 20, et une interface Wi-Fi 13 pour communiquer sans fil avec d'autres équipements similaires. Dans des modes de mise en œuvre,ces autres équipements supportant le Wi-Fi sont capables de se connecter à la passerelle 10 lorsqu'ils sont à portée radio.

La passerelle 10 met en œuvre l'agrégation de liens pour communiquer avec un hôte dans le réseau 20, via un point d'agrégation 21 quelque part dans ledit réseau. Plus particulièrement, l'agrégation de liens est ici mise en œuvre entre les liens Ethernet 12 respectifs de deux équipements identiques ou similaires en utilisant le lien Wi-Fi entre ces deux équipements. Plus particulièrement, la box 10 comprend un moteur d'agrégation 15 recevant les On notera que le point d'agrégation n'est pas systématiquement le même pour l'ensemble des équipements sont susceptibles de participer à la formation de boucles.

Dans le contexte de la mise en œuvre du procédé de routage de données selon des modes de mise en œuvre de l'invention, une passerelle telle que la passerelle 10 montrée à la Figure 1 peut ainsi communiquer avec un hôte dans le réseau 10 directement via l'interface Ethernet 12, mais aussi indirectement via une interface Ethernet d'un autre équipement réseau identique ou similaire avec lequel elle communique en Wi-Fi.

L'apparition de technologies telle que le Wi-Fi offre en effet aux internautes la possibilité de transformer leur point d'accès privé en hotspot publique, ou du moins partagé. En effet, chaque internaute peut offrir à d'autres internautes la possibilité d'utiliser tout ou partie de sa bande passante pour communiquer avec l'Internet via son réseau Wi-Fi. La passerelle résidentielle d'un particulier peut ainsi devenir un hotspot Wi-Fi ouvert à tous les utilisateurs présents dans la zone de couverture radio. Cette possibilité est actuellement encouragée par certains fournisseurs d'accès à Internet (FAI) au sein de la communauté de leurs clients/abonnés. Ils y voient le moyen d'augmenter la bande passante disponible pour chacun de leurs abonnés en mutualisant les points d'accès de plusieurs d'entre eux. Les passerelles résidentielles requièrent des capacités qui gonflent inexorablement avec l'augmentation du trafic de données multimédias, la multiplication des applications cloud et la montée en débit des accès (parfois au-delà de 100 Mbit/s). Cette complexité accrue se traduit par une plus grande occurrence de problèmes techniques, qui génère une augmentation des coûts pour les fournisseurs de services, en particulier avec les interventions à domicile.

Dans ce contexte, l'invention propose une solution au problème consistant dans le risque de formation de boucles lorsque les liens qui sont agrégés sont des liens de deux équipements de réseau (CPE) qui tous les deux mettent en œuvre de l'agrégation de liens, avec au minimum deux liens :
- un lien de sortie vers l'autre équipement de réseau comme le lien de sortie L₁ de l'interface 13 (interface Wi-Fi) de l'équipement 10 de la Figure 1; et
- au moins un autre lien de sortie comme le lien de sortie L₂ de l'interface 12 (interface WAN) de l'équipement 10 de la Figure 1, qui est capable d'atteindre un point d'agrégation comme le point d'agrégation 21 de la Figure 1, dans le réseau 20.

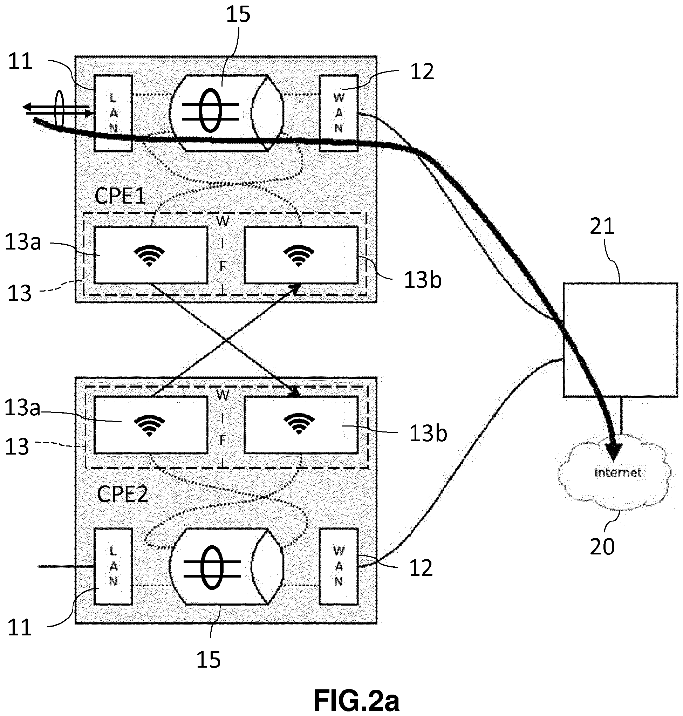

Les Figures 2A-2C illustrent les différents chemins que peuvent suivre les données entre une première passerelle résidentielle CPE1 et une seconde passerelle résidentielle CPE2 comme celle de la Figure 1 mettant toutes les deux en œuvre l'agrégation de liens, lorsque chacune possède un lien de sortie direct vers Internet un autre lien de sortie pour atteindre Internet via l'autre passerelle. Par exemple cela peut être le fait d'être client au Wi-Fi public d'une passerelle résidentielle située dans le voisinage.

C'est ce dernier lien qui peut être à l'origine de boucles, ainsi qu'il va maintenant être présenté. En effet, si un lien de sortie d'un équipement mettant en œuvre l'agrégation de liens a pour destination un équipement qui peut lui aussi faire de l'agrégation de liens avec un lien direct vers Internet et un autre lien qui n'atteint Internet qu'indirectement à travers l'équipement source, alors ce lien de sortie peut être à l'origine de la création de boucles.

Sur les **Figures 2A-2C****,** le chemin parcouru par les données pour atteindre le point d'agrégation dans Internet est représenté par un trait épais.

En référence au schéma de la **Figure 2A****,** le moteur d'agrégation de la passerelle CPE1 peut prendre la décision de n'utiliser que le lien de sortie L₂, i.e. le lien de sortie de l'interface Ethernet WAN pour atteindre directement le point d'agrégation 21 dans l'Internet 20. Dans un tel cas, il n'y a pas de risque de formation de boucle.

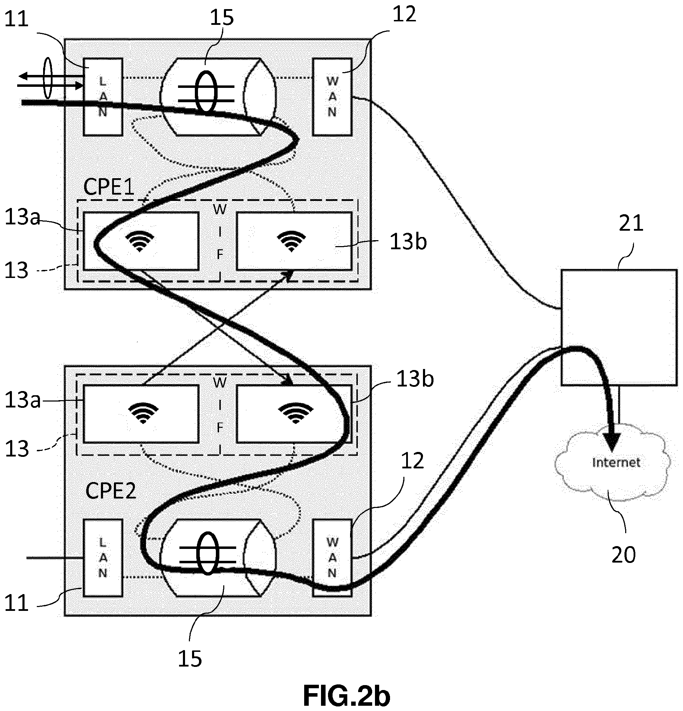

Dans le cas de la **Figure 2B****,** le moteur d'agrégation de la passerelle CPE1 prend la décision d'utiliser non seulement le lien de sortie L₂, i.e. le lien de sortie de l'interface Ethernet WAN, mais aussi le lien de sortie L₁, i.e. le lien qui lui permet d'atteindre directement le point d'agrégation 21 dans l'Internet 20, à savoir via le lien Ethernet de l'autre passerelle CPE2. Dit autrement, les liens de sortie L₁ et L₁ de la passerelle CPE1 sont agrégés. Dans un tel cas, il y a un risque de formation de boucle. En fait, tout dépend de la décision prise alors, cette fois, par le moteur d'agrégation de liens de la passerelle CPE2. Dans l'exemple représenté, seul le lien de sortie L₂, *i.e.* le lien de sortie de l'interface Ethernet WAN, de la passerelle CPE2 est utilisé pour atteindre directement le point d'agrégation 21 dans l'Internet 20 depuis la passerelle CPE2. Dans un tel cas, il n'y a pas de formation de boucle. L'agrégation se des liens de sortie L₂ de chacune des passerelles résidentielles CPE1 et CPE2, respectivement, se passe bien.

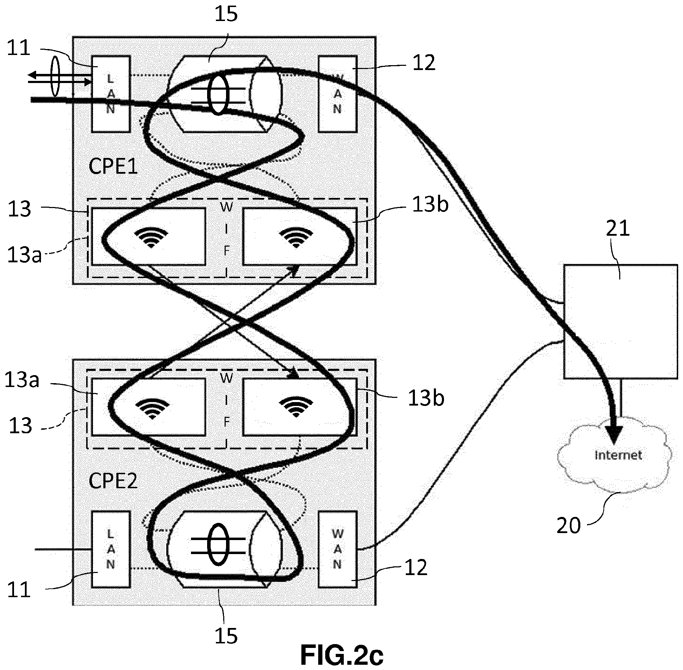

Mais dans le cas représenté à la **Figure 2C****,** par contre, il se forme une boucle. Dans cet exemple en effet, la décision d'agrégation prise par le moteur d'agrégation de la passerelle CPE1 est la même que dans le cas présenté à la Figure 2B et décrit ci-dessus. Néanmoins, le moteur d'agrégation de la passerelle CPE2 prend quant à lui la décision, cette fois, d'utiliser non seulement le lien de sortie L₂, *i.e.* le lien de sortie de l'interface Ethernet WAN, mais aussi le lien de sortie L₁, *i.e.* le lien qui lui permet d'atteindre indirectement le point d'agrégation 21 dans l'Internet 20, à savoir via le lien Ethernet de la passerelle CPE1. Il se forme donc une boucle, puisque la passerelle CPE1 voit revenir les données qu'elle a envoyées vers la passerelle CPE2. Les inconvénients associés à cette boucle existent quelle que soit les décisions d'agrégation prises par les moteurs d'agrégation des box CPE1 et CPE2 par la suite. Dans le pire cas, si les mêmes décisions sont prises N fois successivement, alors les données tournent en boucle N fois entre la box CPE1 et la box CPE2. Il s'ensuit une augmentation de la latence et un « *overhead* » pour la transmission de la charge utile (« *payload* ») de données IP. Cet « *overhead* » peut être important du fait de l'allongement des en-têtes des paquets de données TCP (dans le cas de MPTCP), ou du fait des encapsulations successives (dans le cas de GRE).

Les modes de mise en œuvre proposés permettent d'éviter qu'une telle situation ne se produise, ou du moins d'en limiter substantiellement le risque.

Selon ces modes de mises en œuvre, les différents équipements de réseau (CPE) implémentent l'agrégation de liens en suivant les mêmes règles d'agrégation. Plus particulièrement, leurs moteurs d'agrégations respectifs utilisent les mêmes règles d'agrégation. Typiquement c'est le cas si les deux passerelles CPE1 et CPE2 sont le même produit mis à dispositions de ses abonnés par un Fournisseur d'Accès Internet (FAI) donné.

Lorsqu'un équipement (CPE) dispose de plusieurs autres équipements similaires auxquels il peut se connecter, le CPE peut choisir un équipement (ou plusieurs équipements, si cela est possible) afin de s'y connecter. Il sortirait du cadre de la présente description d'exposer des critères utilisés à cet effet. Cependant, l'Homme du métier appréciera qu'il est préférable de privilégier l'équipement (ou les équipements) qui permet(tent) de maximiser la bande passante. Les modes de réalisation s'appliquent quel que soit le choix opéré par les moteurs d'agrégation.

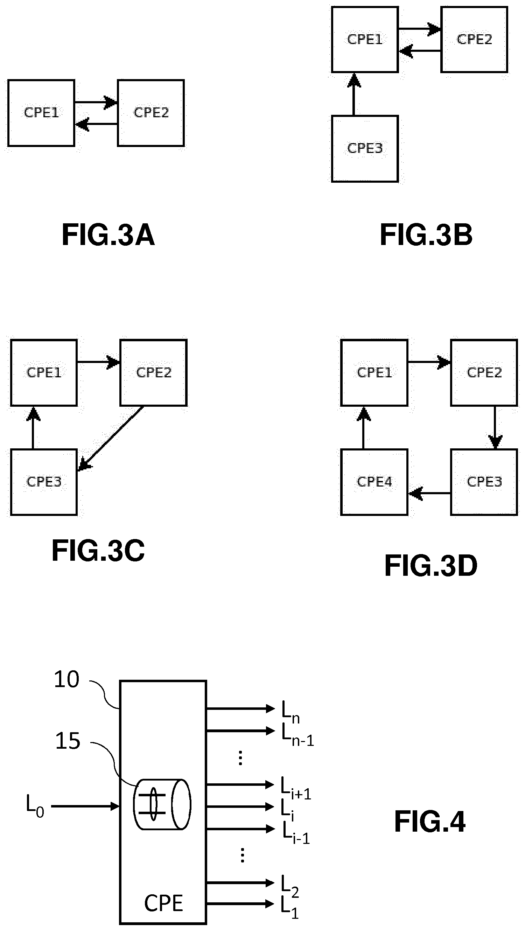

Les **Figures 3A-3D** sont des schémas illustrant différentes configurations susceptibles de donner lieu à la formation de boucles entre deux passerelles résidentielles, ou plus, comme la passerelle résidentielle de la Figure 1.

Le cas de la **Figure 3A** correspond à ce qui a été décrit ci-dessus en référence aux Figures 2A-2C. Il met en œuvre deux box CPE1 et CPE2.

Dans les cas de la **Figures 3B** et de la **Figure 3C****,** une troisième box CPE3 est impliquée. Une boucle peut alors se former entre deux boxes seulement, à savoir les boxs CPE1 et CPE2 comme représenté à la Figure 3B. Mais une boucle peut aussi se former qui inclue les trois boxes CPE1, CPE2 et CPE3 comme représenté à la Figure 3C.

Enfin, dans le cas de la **Figure 3D****,** une boucle se forme qui inclue quatre boxes, CPE1, CPE2, CPE3 et CPE4. Il va sans dire que d'autres configurations de bouclage plus complexes peuvent exister, en fonction des décisions prises par les moteurs d'agrégation respectives de chacune de ces quatre boxes. Egalement lorsque plus de boxes encore sont impliqués.

L'invention, pour autant qu'elle soit mise en œuvre dans chacune des boxes concernées, répond au problème technique associé à l'ensemble des configurations susmentionnées. Pour cela le rôle de « CPE1 » et de « CPE2 » est pris tour à tour par les différents équipements de réseau.

En outre, l'homme du métier appréciera que, si dans les exemples présentés jusqu'ici en référence aux Figures 2A-AC et 3A-3D il y a, pour chaque box CPE1 et CPE2, deux liens de sortie éligibles à l'agrégation, ceci est un minimum. En effet il peut y avoir plus de liens de sortie éligibles à l'agrégation, il n'y a pas de limitation à ce niveau-là. Il peut s'agir d'autres liens susceptibles de créer des boucles (plusieurs liens comme le liens L₁) et/ou de liens qui sont connectés directement à Internet (comme le liens L₂) ou à un équipement qui ne fait pas d'agrégation de liens.

La **Figure** 4 est ainsi un schéma simplifié d'un autre exemple de passerelle résidentielle 10, avec plus de deux liens de sortie éligibles à l'agrégation de liens. Dans l'exemple représenté, il y a par exemple un nombre n de liens de sortie Lᵢ, où i est un indice compris entre 1 et n. Ces liens L₁ à Lₙ permettent de connecter la box 10 à Internet, directement ou indirectement via d'autres boxes ou d'autres équipements. Dans l'exemple représenté, le lien L₀ est le lien d'entrée par lequel la box 10 est connectée au réseau domestique (LAN) de l'abonné.

En référence au diagramme d'étapes de la **Figure 5**, le procédé de routage d'informations selon des modes de mises en œuvre comprend les étapes suivantes, qui sont mises en œuvre dans le second équipement réseau CPE2 des Figures 2A-2C, et, par exemple, plus particulièrement dans le moteur d'agrégation 15 de cet équipement.

A l'étape 51, la box CPE2 reçoit des données de la box CPE1. Dans des exemples applications ces données comprennent des paquets de données UDP. Néanmoins dans d'autres applications elles peuvent comprendre une connexion, ou un flux de données (« *data flow* »). Les données sont reçues via une interface de rang i0 déterminé, dans l'ensemble des n interfaces correspondant aux n liens de sortie Lᵢ (avec i compris entre 1 et n) de la box générique 10 représentée à la Figure 4.

A l'étape 52, on détecte si les données reçues à l'étape 51 ont déjà subi ou non une opération d'agrégation de liens dans la box CPE1 ou en amont, sur la base de marqueurs présents dans les données.

Le terme « en amont » se réfère ici au parcours des données depuis l'hôte source qui a le premier émis les données, et peut les avoir transmis directement ou indirectement (*i.e.* via d'autres équipements de réseau) à la box CPE1 dans le cadre d'une (ou plusieurs) opération(s) de routage antérieure(s). En effet, la box CPE1 n'est pas forcément l'hôte à l'origine de la transmission des données, et peut n'être qu'un nœud de transmission entre l'hôte source et l'hôte de destination dans le réseau 20.

Le terme « marqueurs » se réfère quant à lui à de l'information présente dans les données qui marquent le fait, *i.e.* qui indiquent que les données ont subi une agrégation de liens en amont de la box CPE2 dans la chaîne de transmission, soit dans la box CPE1 d'où les données arrivent directement, soit encore en amont de la box CPE1. Cette notion générique de marqueurs fait référence à diverses réalités, selon les mises en œuvre concernées.

Notamment, si le protocole MPTCP a été utilisé pour l'agrégation de liens comme dans l'exemple représenté à la Figure 5, alors le champ d'option TCP 30, réservé à cet effet par *l'Internet Assigned Number Authority* (IANA), est présent dans les données reçues par la box CPE2. L'étape 52 comprend alors le test de la présence de ce champ d'option dans les données reçues. Si c'est le protocole GRE qui a été utilisé, alors le marqueur à rechercher dans les données reçues correspond au code 47 dans le champ « protocol » de l'entête IP d'un paquet de données IPv4, ou bien dans le champ « next header » du dernier entête d'un paquet de données IPv6. D'autres exemples seront donnés plus loin.

Dans tous les modes de mise en œuvre, il y a alors deux cas pour la sélection du lien de sortie L_{OUT} par le moteur d'agrégation 15 de la box CPE2, en fonction du résultat du test de l'étape 52.

Si les données n'ont pas déjà subi d'agrégation de liens, alors à l'étape 53 le moteur 15 sélectionne le lien de sortie L_{OUT} parmi tous les liens de sortie de la box CPE2 participant à l'agrégation de lien dans cet équipement. Dans l'exemple représenté à la Figure 5 et pour une box CPE2 conforme à celle de la Figure 4, il s'agit de tous les liens n de liens de sortie L_{i,} où i prend toutes les valeurs d'indice comprises entre 1 et n. Dit autrement, le lien de sortie L_{OUT} est sélectionné parmi tous les liens de sortie L₁ à Lₙ de la box CPE2 participant à l'agrégation, y-compris le lien Lᵢ₀ de l'interface via laquelle les données ont été reçues par la box CPE2.

Sinon, c'est-à-dire si les données ont déjà subi une agrégation de liens, alors à l'étape 54 on sélectionne le lien de sortie L_{OUT} parmi tous les liens de sortie de la box CPE2 participant à l'agrégation de liens dans cet équipement de réseau sauf le lien de sortie Lᵢ₀ vers la box CPE1 d'où proviennent les données. On réduit ainsi significativement le risque de formation d'une boucle du fait de l'agrégation de liens mise en œuvre dans ces deux box CPE1 et CPE2. Ceci est particulièrement efficace si seul le lien Lᵢ₀ vers la box CPE1 est un lien ouvert, par exemple un lien radio, comme un lien d'une interface Wi-Fi public, alors que tous les autres liens de sortie L₁, ..., Lᵢ₀₋₁, Lᵢ₀₊₁, ..., Lₙ sont des liens permettant directement d'atteindre directement le point d'agrégation 21 dans le réseau 20. C'est le cas dans les modes de mise en œuvre principalement envisagés ici, tels que décrit plus haut en référence aux schémas des Figures 1 et 2A-2C. Dans ces exemples en effet, le lien Lᵢ₀₋₁ de la box CPE2 vers la box CPE1 est le lien Wi-Fi noté L₁, et le lien de sortie qui est sélectionné en cas d'agrégation de liens antérieure détectée à l'étape 52 est le lien WAN noté L₂ qui permet d'atteindre le point d'agrégation 21 directement dans Internet 20.

Le routage des données se termine, à l'étape 55, par la transmission des données sur le lien de sortie L_{OUT} sélectionné à l'étape 53 ou à l'étape 54, selon le cas.

Dans la plupart des mises en œuvre, notamment si la box CPE2 comprend plus d'un lien de sortie L1, ..., Lᵢ₀₋₁, Lᵢ₀₊₁, ..., Lₙ autre que le lien de sortie Lᵢ₀ vers la box CPE1 (avec donc n supérieur ou égal à 3), on utilise le moteur d'agrégation 15 de la box CPE2 pour sélectionner le lien de sortie de cet équipement de réseau.

Toutefois, lorsque n est égal à 2, en sorte que la box CPE2 ne comprend qu'un unique lien de sortie L₂ autre que le lien de sortie L₁ vers la box CPE1 d'où proviennent les données reçues à l'étape 51 (*i.e.,* le lien Lᵢ₀ de l'interface par laquelle les données ont été reçues est le lien L₁ dans cet exemple), alors l'étape 65 de transmission des données comprend la transmission des données directement sur ledit unique lien de sortie L₂ autre que le lien de sortie L₁ vers la box CPE1, sans utilisation du moteur d'agrégation 15 de la box CPE2. En effet, on sait alors que pour éviter la formation de boucle les données ne peuvent être transmises que sur cet autre lien unique L2.

Comme il a déjà été mentionné plus haut, lorsque la box CPE1 et la box CPE2 utilisent le protocole MPTCP pour l'agrégation de liens, la détection 52 de si les données ont déjà subi ou non une opération d'agrégation de liens dans la box CPE1 ou en amont comprend le test de la présence de l'option TCP 30 « multipath TCP » dans les données reçues par la box CPE2.

Dans la variante également déjà mentionnée, lorsque la box CPE1 et la box CPE2 utilisent des tunnels GRE pour l'agrégation de liens, la détection 52 de si les données ont déjà subi ou non une opération d'agrégation de liens dans la box CPE1 ou en amont comprend le test du champ « protocol » dans un entête d'un paquet de données IPv4 (ou bien, le cas échéant, du champ « next header » du dernier entête d'un paquet IPv6) compris dans les données reçues de la box CPE1. Plus spécifiquement, on teste si ce champ est égal à 47.

En variante ou en complément des deux cas ci-dessus, l'étape de test 52 peut comprendre le test d'autres marqueurs dans les données qui indiquent que ces données ont subi une agrégation de liens en amont de la box CPE2.

Par exemple, la détection 52 de si les données ont déjà subi ou non une opération d'agrégation de liens dans la box CPE1 ou en amont peut comprendre en outre une vérification de l'interface par lequel les données sont rentrées dans la box CPE2. Ceci permet de lever des limitations liées au fait que MPTCP ou GRE, respectivement, puisse avoir été utilisé dans la box CPE1 ou en amont dans un autre contexte que l'agrégation de liens.

Dans un autre exemple, la détection 52 de si les données ont déjà subi ou non une opération d'agrégation de liens dans la box CPE1 ou en amont comprend la comparaison de l'adresse IP de destination d'un paquet de données compris dans les données reçues de la box CPE1 avec les adresses IP contenues dans une liste d'adresses IP du point d'agrégation 21, pour autant bien entendu que ces adresses soient connues de la box CPE2.

Dans un autre exemple, la détection 52 de si les données ont déjà subi ou non une opération d'agrégation de liens dans la box CPE1 ou en amont comprend le test, en outre (c'est-à-dire en plus du test de la présence de TCP 30 « multipath TCP » pour MPTCP, ou du test de si le champ « protocol » dans l'entête IP d'un paquet de données IPv4 ou du champ «next header » du dernier en-tête d'un paquet IPv6 compris dans les données reçues de la box CPE1 est égal à 47 pour GRE), d'un identifiant, connu par la box CPE2, de la box CPE1 et/ou d'un autre équipement en amont de cette box CPE1 par lequel les données ont transité avant d'atteindre la box CPE2.

L'identifiant de la box CPE1 peut comprendre une adresse physique dans le réseau qui est propre audit premier équipement de réseau, par exemple son adresse MAC (mis pour « *Media Access Control* »), et est connue de la box CPE2. Elle peut être connu soit de manière statique, soit parce qu'elle est communiquée à la box CPE2 par un protocole de gestion du réseau comme le protocole TR-069 ou le protocole SNMP (« *Simple Network Management Protocol* », en français «protocole simple de gestion de réseau ») qui est un protocole de communication qui permet aux administrateurs réseau de gérer les équipements du réseau, de superviser et de diagnostiquer des problèmes réseaux et matériels à distance.

Dans un exemple, le test 52 peut alors se baser sur un intervalle d'adresses MAC connues, par exemple sur la base des trois premiers octets des adresses MAC qui désignent le constructeur c'est-à-dire l'identifiant de l'organisation OUI (« *Organizationally Unique Identifier »)* géré par l'IEEE pour assurer l'unicité des numéros d'adresse MAC.

L'homme du métier appréciera que les exemples précités peuvent se combiner entre eux, afin de donner une détection plus fiable de si les données ont connu une agrégation de lien antérieure.

On va maintenant décrire un mode de mise en œuvre de l'étape de détection 62 qui peut être utilisé dans d'un lien entre les équipement CPE1 et CPE2 qui est un lien Wi-Fi public.

Les protocoles de la série 802.11 opèrent au niveau de la couche 2 du modèle OSI et prévoient la transmission de trois types de trames sans fil :
- des trames de commande (« *Control frames* »), qui aident la délivrance des trames de données ;
- des trames de gestion (« *Management frames* »), qui sont utilisées pour l'établissement et le maintien des communications Wi-Fi ; et,
- des trames de données (« *Data frames* ») qui assurent le transport proprement dit des données utiles.

Les clients Wi-Fi envoient des trames de gestion de sous-type probe request pour déterminer quels points d'accès ou AP (de l'anglais *« Access Point* ») sont atteignables. Et les AP répondent aux clients avec des informations sur leur capacités comme le nom du réseau (SSID), les débits supportés, les noms et constructeur de l'AP, etc.

C'est pourquoi dans un mode de mise en œuvre où les données sont reçues par l'équipement CPE2 via l'interface Wi-Fi public, on peut prévoir que l'équipement CPE1 ajoute, quand il utilise l'agrégation de liens, un identifiant unique dans les données. Cet identifiant unique peut être, par exemple, un tag *« vendor specific* » dans les probe requests 802.11, avec une valeur connue à la fois par l'équipement CPE1 et par l'équipement CPE2. Lorsque l'équipement CPE2 reçoit un probe request provenant de CPE1 avec le tag *« vendor specific* » de valeur convenue, il associe le fait de recevoir les données de l'équipement CPE1 (par exemple en se basant sur son adresse MAC) au fait que toutes les données en provenance de cet équipement ont déjà été agrégées.

Un dernier mode de mise en œuvre s'applique au cas où l'équipement CPE2 joue le rôle de serveur DHCP (« *Dynamic Host Configuration Protocol* ») vis-à-vis de l'équipement CPE1 dans le cadre du Wi-Fi public. On rappelle que DHCP, protocole de configuration dynamique des hôtes, est un protocole réseau dont le rôle est d'assurer la configuration automatique des paramètres IP d'une station ou d'une machine, notamment en lui affectant automatiquement une adresse IP et un masque de sous-réseau.

C'est pourquoi, si l'équipement CPE2 joue le rôle de serveur DHCP vis-à-vis de l'équipement CPE1 dans le cadre du Wi-Fi public, alors l'équipement CPE1 peut indiquer via une option DHCP (par exemple l'option 60 « vendor class identifier » avec une valeur prédéfinie et connue de CPE1 et de CP2) le fait qu'il fait déjà de l'agrégation. Ainsi, l'équipement CPE2 peut associer toutes les données en provenance de CPE1 au fait qu'elles ont déjà été agrégées.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Procédé de routage de données reçues d'un premier équipement de réseau (CPE1) dans un second équipement de réseau (CPE2) d'un réseau de données (20), chacun desdits premier et second équipements de réseau comprenant un moteur d'agrégation de liens (15) mettant en œuvre une technique d'agrégation de liens en utilisant les mêmes règles d'agrégation pour sélectionner l'un parmi au moins un premier et un second liens de sortie (L₁,L₂) participant à l'agrégation de lien dans ledit équipement de réseau avec :
- un lien de sortie (L₁) vers l'autre équipement de réseau; et
- au moins un autre lien de sortie (L₂) qui est capable d'atteindre un point d'agrégation (21) déterminé dans le réseau de données (20),
le procédé comprenant les étapes suivantes, mises en œuvre dans le second équipement réseau (CPE2) :
i. réception (51) de données arrivant du premier équipement de réseau (CPE1) ;
ii. détection (52) de si les données ont déjà subi ou non une opération d'agrégation de liens dans le premier équipement de réseau (CPE1) ou en amont, sur la base de marqueurs présents dans les données ; puis,
iii. sélection (53) d'un lien de sortie (L_{OUT}) parmi tous les liens de sortie du second équipement de réseau (CPE2) participant à l'agrégation de lien dans ledit second équipement de réseau si les données n'ont pas déjà subi d'agrégation de liens, ou sélection (54) du lien de sortie (L_{OUT}) parmi tous les liens de sortie du second équipement réseau (CPE2) participant à l'agrégation de liens dans ledit second équipement de réseau sauf le lien de sortie (L₁) vers le premier équipement réseau (CPE1) si les données ont déjà subi une agrégation de liens ; et,
iv. transmission (55) des données sur le lien de sortie (L_{OUT}) sélectionné.

2. Procédé selon la revendication 1 comprenant l'utilisation d'un moteur d'agrégation (15) du second équipement de réseau (CPE2) pour sélectionner le lien de sortie dudit second équipement de réseau si ledit second équipement de réseau comprend plus d'un lien de sortie (L₁, ..., Lᵢ₋₁, Lᵢ₊₁, ..., Lₙ) autre que le lien de sortie (Lᵢ) vers le premier équipement de réseau (CPE1).

3. Procédé selon la revendication 1 dans lequel, si le second équipement de réseau (CPE2) ne comprend qu'un unique lien de sortie (L₂) autre que le lien de sortie (L₁) vers le premier équipement réseau (CPE1), l'étape (55) de transmission des données comprend la transmission des données directement sur ledit unique lien de sortie (L₂) autre que le lien de sortie (L₁) vers le premier équipement de réseau, sans utilisation du moteur d'agrégation (15) du second équipement de réseau (CPE2).

4. Procédé selon l'une quelconque des revendications 1 à 3, dans lequel, le premier équipement de réseau (CPE1) et le second équipement réseau (CPE2) utilisant le protocole MPTCP pour l'agrégation de liens, la détection (52) de si les données ont déjà subi ou non une opération d'agrégation de liens dans le premier équipement de réseau (CPE1) ou en amont comprend le test de la présence de l'option TCP 30 « multipath *TCP* » dans les données reçues dans le second équipement de réseau (CPE2).

5. Procédé selon l'une quelconque des revendications 1 à 3, dans lequel, le premier équipement réseau (CPE1) et le second équipement réseau (CPE2) utilisant des tunnels GRE pour l'agrégation de liens, la détection de si les données ont déjà subi ou non une opération d'agrégation de liens dans le premier équipement de réseau (CPE1) ou en amont comprend le test de si le champ « protocol » dans l'entête IP d'un paquet de données IPv4, ou le champ « next header » dans le dernier entête d'un paquet de données IPv6, compris dans les données reçues du premier équipement de réseau, est égal à 47.

6. Procédé selon l'une quelconque des revendications 4 ou 5, dans lequel la détection de si les données ont déjà subi ou non une opération d'agrégation de liens dans le premier équipement de réseau (CPE1) ou en amont comprend en outre une vérification de l'interface par lequel les données sont rentrées dans le second équipement réseau (CPE2) pour lever des limitations liées au fait que MPTCP ou GRE, respectivement, puisse avoir été utilisé dans le premier équipement de réseau (CPE1) ou en amont dans un autre contexte que l'agrégation de liens.

7. Procédé selon l'une quelconque des revendications précédentes, dans lequel la détection (52) de si les données ont déjà subi ou non une opération d'agrégation de liens dans le premier équipement de réseau (CPE1) ou en amont comprend la comparaison de l'adresse IP de destination d'un paquet de données compris dans les données reçues du premier équipement de réseau (CPE1) avec des adresses IP contenues dans une liste d'adresses IP respectives d'une pluralité de points d'agrégation du réseau de données (20).

8. Procédé selon l'une quelconque des revendications précédentes, dans lequel la détection (52) de si les données ont déjà subi ou non une opération d'agrégation de liens dans le premier équipement de réseau (CPE1) ou en amont comprend le test, en outre, d'un identifiant, connu par le second équipement de réseau (CPE2), du premier équipement de réseau (CPE1) et/ou d'un autre équipement en amont dudit premier équipement de réseau (CPE1) par lequel les données ont transité avant d'atteindre le second équipement de réseau (CPE2).

9. Procédé selon la revendication 8, dans lequel l'identifiant du premier équipement de réseau (CPE1) comprend une adresse physique dans le réseau qui est propre audit premier équipement de réseau, et est connue du second équipement de réseau (CPE2) soit de manière statique soit parce qu'elle est communiquée audit second équipement de réseau par un protocole de gestion du réseau, et dans lequel le test de l'identifiant comprend la comparaison avec un intervalle d'adresses physiques connues du second équipement de réseau.

10. Procédé selon l'une quelconque des revendications précédentes, dans lequel, les données étant reçues du premier équipement de réseau via un interface Wi-Fi IEEE 802.11 du second équipement de réseau, la détection (52) de si les données ont déjà subi ou non une opération d'agrégation de liens dans le premier équipement de réseau (CPE1) ou en amont comprend le test, en outre, d'une valeur spécifique dans l'attribut numéro 26 d'une trame de type *probe request*

11. Procédé selon l'une quelconque des revendications précédentes, dans lequel, le second équipement de réseau (CPE2) jouant le rôle de serveur DHCP vis-à-vis du premier équipement de réseau (CPE1) et les données étant reçues par ledit second équipement de réseau via un réseau Wi-Fi public, la détection (52) de si les données ont déjà subi ou non une opération d'agrégation de liens dans le premier équipement de réseau (CPE1) comprend le test d'une option DHCP avec une valeur prédéfinie connue du premier équipement de réseau et du second équipement de réseau, insérée par le premier équipement de réseau (CPE1) lorsque les données font l'objet d'une agrégation de liens dans ledit premier équipement de réseau.

12. Dispositif de routage de données reçues d'un premier équipement de réseau (CPE1) dans un second équipement de réseau (CPE2), chacun desdits premier et second équipements de réseau comprenant un moteur d'agrégation de liens (15) mettant en œuvre une technique d'agrégation de liens en utilisant les mêmes règles d'agrégation pour sélectionner l'un parmi au moins un premier et un second liens de sortie (L1,L2) participant à l'agrégation de lien dans ledit équipement de réseau avec :
- un lien de sortie (L1) vers l'autre équipement de réseau; et
- au moins un autre lien de sortie (L2) qui est capable d'atteindre un point d'agrégation (21) dans le réseau (20),
le dispositif comprenant, dans le second équipement de réseau (CPE2) :
i. des moyens pour la réception (51) de données arrivant du premier équipement de réseau (CPE1) ;
ii. des moyens pour la détection (52) de si les données ont déjà subi ou non une opération d'agrégation de liens dans le premier équipement de réseau (CPE1) ou en amont, sur la base de marqueurs présents dans les données ;
iii. des moyens pour la sélection (53) d'un lien de sortie (L_{OUT}) parmi tous les liens de sortie du second équipement de réseau (CPE2) participant à l'agrégation de lien dans ledit second équipement de réseau si les données n'ont pas déjà subi d'agrégation de liens, ou sélection (64) du lien de sortie (L_{OUT}) parmi tous les liens de sortie du second équipement de réseau (CPE2) participant à l'agrégation de liens dans ledit second équipement de réseau sauf le lien de sortie (L₁) vers le premier équipement de réseau (CPE1) si les données ont déjà subi une agrégation de liens ; et,
iv. des moyens pour la transmission (55) des données sur le lien de sortie (L_{OUT}) sélectionné.

13. Passerelle résidentielle (CPE2) comprenant un dispositif selon la revendication 12.

14. Produit "programme d'ordinateur" chargeable directement dans la mémoire interne d'un ordinateur numérique, comprenant des portions de code de logiciel qui, lorsque ledit programme est exécuté par un ordinateur, conduisent celui-ci à mettre en œuvre toutes les étapes du procédé selon l'une quelconque des revendications 1 à 11.

15. Support d'enregistrement de données lisible par une machine comprenant un processeur, comprenant le programme d'ordinateur selon la revendication 14.

## Patentansprüche

1. Routingverfahren von Daten, die von einer ersten Netzausrüstung (CPE1) in einer zweiten Netzausrüstung (CPE2) eines Datennetzes (20) empfangen werden, wobei jede der genannten ersten und der genannten zweiten Netzausrüstungen einen Komprimierungsmotor von Links (15) umfasst, die eine Komprimierungstechnik von Links unter Verwenden derselben Komprimierungsregeln zum Auswählen wenigstens eines eines ersten und eines zweiten Ausgangslinks (L₁, L₂) umsetzen, die an der Link-Komprimierung in der genannten Netzausrüstung teilnehmen mit:
- einem Ausgangslink (L₁) zur anderen Netzausrüstung; und;
- wenigstens einem anderen Ausgangslink (L₂), der in der Lage ist, einen bestimmten Komprimierungspunkt (21) im Datennetz (20) zu erreichen,
wobei das Verfahren die folgenden Schritte umfasst, die in der zweiten Netzausrüstung (CPE2) umgesetzt werden:
i. Empfang (51) von Daten, die von der ersten Netzausrüstung (CPE1) eintreffen;
ii. Detektion (52), ob die Daten bereits einer Komprimierungsoperation von Links in der ersten Netzausrüstung (CPE1) oder davor oder nicht auf der Grundlage von Markern unterzogen worden sind, die in den Daten vorhanden sind; dann
iii. Auswahl (53) eines Ausgangslinks (L_{OUT}) aus allen Ausgangslinks der zweiten Netzausrüstung (CPE2), die an der Link-Komprimierung in der genannten zweiten Netzausrüstung beteiligt sind, wenn die Daten nicht bereits einer Link-Komprimierung unterzogen worden sind, oder Auswahl (54) des Ausgangslinks (L_{OUT}) aus allen Ausgangslinks der zweiten Netzausrüstung (CPE2), die an der Link-Komprimierung in der genannten zweiten Netzausrüstung beteiligt sind, mit Ausnahme des Ausgangslinks (L₁) zur ersten Netzausrüstung (CPE1), wenn die Daten bereits einer Link-Komprimierung unterzogen worden sind; und
iv. Übertragung (55) der Daten auf den ausgewählten Ausgangslink (LouT).

2. Verfahren gemäß Anspruch 1, umfassend die Nutzung eines Komprimierungsmotors (15) der zweiten Netzausrüstung (CPE2) zum Auswählen des Ausgangslinks der genannten zweiten Netzausrüstung, wenn die genannte zweite Netzausrüstung mehr als einen Ausgangslink (L₁, ..., Lᵢ₋₁, Lᵢ₊₁, ..., Lₙ) umfasst, der nicht der Ausgangslink (Lᵢ) zur ersten Netzausrüstung (CPE1) ist.

3. Verfahren gemäß Anspruch 1, bei dem, wenn die zweite Netzausrüstung (CPE2) nur einen einzigen Ausgangslink (L₂) umfasst, der nicht der Ausgangslink (L₁) zur ersten Netzausrüstung (CPE1) ist, der Übertragungsschritt (55) der Daten die Übertragung der Daten direkt auf den genannten einzigartigen Ausgangslink (L₂), der nicht der Ausgangslink (L₁) zur ersten Netzausrüstung ist, ohne die Verwendung des Komprimierungsmotors (15) der zweiten Netzausrüstung (CPE2) umfasst.

4. Verfahren gemäß irgendeinem der Ansprüche 1 bis 3, bei dem die erste Netzausrüstung (CPE1) und die zweite Netzausrüstung (CPE2), die das Protokoll MPTCP für die Link-Komprimierung verwenden, die Detektion (52), ob die Daten bereits einer Komprimierungsoperation von Links in der ersten Netzausrüstung (CPE1) oder vorher oder nicht unterzogen worden sind, den Test des Vorhandenseins der Option TCP 30 "*multipath TCP"* in den Daten umfasst, die in der zweiten Netzausrüstung (CPE2) empfangen werden.

5. Verfahren gemäß irgendeinem der Ansprüche 1 bis 3, bei dem die erste Netzausrüstung (CPE1) und die zweite Netzausrüstung (CPE2), die Tunnel GRE für die Link-Komprimierung verwenden, die Detektion, ob die Daten bereits einer Komprimierungsoperation von Links in der ersten Netzausrüstung (CPE1) oder davor oder nicht unterzogen worden sind, den Test umfasst, ob das Feld "Protokoll" in der Kopfzeile IP eines Datenpakets IPv4 oder das Feld "next header" in der letzten Kopfzeile eines Datenpakets IPv6, das in den von der ersten Netzausrüstung empfangenen Daten inbegriffen ist, gleich 47 ist.

6. Verfahren gemäß irgendeinem der Ansprüche 4 oder 5, bei dem die Detektion, ob die Daten bereits einer Komprimierungsoperation von Links in der ersten Netzausrüstung (CPE1) oder davor oder nicht unterzogen worden sind, darüber hinaus eine Überprüfung der Schnittstelle umfasst, über die die Daten in die zweite Netzausrüstung (CPE2) eingetreten sind, um Beschränkungen aufzuheben, die mit der Tatsache zusammenhängen, dass jeweils MPTCP oder GRE in der ersten Netzausrüstung (CPE1) oder davor in einem anderen Kontext als der Link-Komprimierung verwendet worden sein kann.

7. Verfahren gemäß irgendeinem der voranstehenden Ansprüche, bei dem die Detektion (52), ob die Daten bereits einer Komprimierungsoperation von Links in der ersten Netzausrüstung (CPE1) oder davor oder nicht unterzogen worden sind, den Vergleich der Zieladresse IP eines Datenpakets umfasst, das in den von der ersten Netzausrüstung (CPE1) empfangenen Daten mit IP-Adressen umfasst ist, die in einer Liste jeweiliger IP-Adressen aus einer Vielzahl von Komprimierungspunkten des Datennetzes (20) enthalten sind.

8. Verfahren gemäß irgendeinem der voranstehenden Ansprüche, bei dem die Detektion (52), ob die Daten bereits einer Komprimierungsoperation von Links in der ersten Netzausrüstung (CPE1) oder davor oder nicht unterzogen worden sind, darüber hinaus den Test einer der zweiten Netzausrüstung (CPE2) bekannten Kennung der der ersten Netzausrüstung (CPE1) und/oder einer anderen, vorgeschalteten Ausrüstung der genannten ersten Netzausrüstung (CPE1), über die die Daten übertragen worden sind, bevor sie die zweite Netzausrüstung (CPE2) erreichen, umfasst.

9. Verfahren gemäß Anspruch 8, bei dem die Kennung der ersten Netzausrüstung (CPE1) eine physische Adresse in dem Netz umfasst, das der genannten ersten Netzausrüstung gehört und der zweiten Netzausrüstung (CPE2) entweder statisch oder weil sie der genannten zweiten Netzausrüstung durch ein Verwaltungsprotokoll des Netzes kommuniziert wird, bekannt ist, und bei dem der Test der Kennung den Vergleich mit einem Intervall von physischen Adressen, die der zweiten Netzausrüstung bekannt sind, umfasst.

10. Verfahren gemäß irgendeinem der voranstehenden Ansprüche, bei dem, da die Daten von der ersten Netzausrüstung über eine Schnittstelle Wi-Fi IEEE 802.11 der zweiten Netzausrüstung empfangen werden, die Detektion (52), ob die Daten bereits einer Komprimierungsoperation von Links in der ersten Netzausrüstung (CPE1) oder davor oder nicht unterzogen worden sind, darüber hinaus den Test eines spezifischen Wertes in dem Attribut Nummer 26 eines Rasters vom Typ *probe request* umfasst.

11. Verfahren gemäß irgendeinem der voranstehenden Ansprüche, bei dem die zweite Netzausrüstung (CPE2), die gegenüber der ersten Netzausrüstung (CPE1) die Rolle des Servers DHCP spielt und wobei die Daten von der genannten zweiten Netzausrüstung über ein öffentliches Netz Wi-Fi empfangen werden, die Detektion (52), ob die Daten bereits einer Komprimierungsoperation von Links in der ersten Netzausrüstung (CPE1) oder nicht unterzogen worden sind, den Test einer Option DHCP mit einem vordefinierten Wert umfasst, der der ersten Netzausrüstung und der zweiten Netzausrüstung bekannt ist, der von der ersten Netzausrüstung (CPE1) eingeführt wird, wenn die Daten einer Link-Komprimierung in der genannten Netzausrüstung unterzogen werden.

12. Routingvorrichtung von Daten, die von einer ersten Netzausrüstung (CPE1) in einer zweiten Netzausrüstung (CPE2) empfangen werden, wobei jede der genannten ersten und der genannten zweiten Netzausrüstungen einen Komprimierungsmotor von Links (15) umfasst, der eine Komprimierungstechnik von Links unter Verwenden derselben Komprimierungsregeln zum Auswählen von wenigstens einem aus einem ersten und einem zweiten Ausgangslink (L1, L2) umsetzt, der zum Link-Komprimieren in der genannten Netzausrüstung beiträgt, mit:
- einem Ausgangslink (L1) zur anderen Netzausrüstung; und
- wenigstens einem anderen Ausgangslink (L2), der in der Lage ist, einen Komprimierungspunkt (21) in dem Netz (20) zu erreichen,
wobei die Vorrichtung in der zweiten Netzausrüstung (CPE2) umfasst:
i. Mittel für den Empfang (51) von Daten, die von der ersten Netzausrüstung (CPE1) eintreffen;
ii. Mittel für die Detektion (52), ob die Daten bereits einer Komprimierungsoperation von Links in der ersten Netzausrüstung (CPE1) oder davor oder nicht auf der Grundlage von Markern unterzogen worden sind, die in den Daten vorhanden sind;
iii. Mittel für die Auswahl (53) eines Ausgangslinks (L_{OUT}) aus allen Ausgangslinks der zweiten Netzausrüstung (CPE2), die an der Link-Komprimierung in der genannten zweiten Netzausrüstung beteiligt sind, wenn die Daten nicht bereits einer Link-Komprimierung unterzogen worden sind, oder Auswahl (64) des Ausgangslinks (L_{OUT}) aus allen Ausgangslinks der zweiten Netzausrüstung (CPE2), die an der Link-Komprimierung in der genannten zweiten Netzausrüstung beteiligt sind, mit Ausnahme des Ausgangslinks (Lᵢ) zur ersten Netzausrüstung (CPE1), wenn die Daten bereits einer Link-Komprimierung unterzogen worden sind; und
iv. Mitteln für die Übertragung (55) der Daten auf den ausgewählten Ausgangslink (Lout).

13. Stationäres Gateway (CPE2), umfassend eine Vorrichtung gemäß Anspruch 12.

14. "Computerprogramm"-Produkt, das direkt in den internen Speicher eines digitalen Computers ladbar ist, umfassend Softwarecode-Abschnitte, die, wenn das genannte Programm von einem Computer ausgeführt wird, diesen dazu veranlassen, alle Schritte des Verfahrens gemäß irgendeinem der Ansprüche 1 bis 11 umzusetzen.

15. Speicherträger von Daten, der von einer Maschine lesbar ist, umfassend einen Prozessor, umfassend das Computerprogramm gemäß Anspruch 14.

## Claims

1. A method for routing data received from a first network equipment (CPE1) into a second network equipment (CPE2) of a data network (20), each of said first and second network equipments comprising a link aggregation engine (15) implementing a link aggregation technique by using the same aggregation rules to select one from at least a first and a second output links (L₁, L₂) involved in link aggregation in said network equipment with:
- an output link (L₁) to the other network equipment; and
- at least one other output link (L2) which is capable of reaching a determined aggregation point (21) in the data network (20),
the method comprising the following steps, implemented in the second network equipment (CPE2), of:
i. receiving (51) data coming from the first network equipment (CPE1);
ii. detecting (52) whether or not the data have already undergone a link aggregation operation in or upstream of the first network equipment (CPE1), based on markers present in the data; and then,
iii. selecting (53) an output link (L_{OUT}) from all the output links of the second network equipment (CPE2) involved in link aggregation in said second network equipment if the data have not already undergone link aggregation, or selecting (54) the output link (L_{OUT}) from all the output links of the second network equipment (CPE2) involved in the link aggregation in said second network equipment except for the output link (Lᵢ) to the first network equipment (CPE1) if the data have already undergone link aggregation; and,
iv. transmitting (55) data over the selected output link (L_{OUT}).

2. The method according to claim 1, comprising using an aggregation engine (15) of the second network equipment (CPE2) to select the output link of said second network equipment if the second network equipment comprises more than one output link (L₁, ..., Lᵢ₋₁, Lᵢ₊₁, ..., Lₙ) other than the output link (Lᵢ) to the first network equipment (CPE1).

3. The method according to claim 1, wherein, if the second network equipment (CPE2) comprises only a single output link (L₂) other than the output link (L₁) to the first network equipment (CPE1), the step (55) of transmitting data comprises transmitting data directly over said single output link (L₂) other than the output link (L₁) to the first network equipment, without using the aggregation engine (15) of the second network equipment (CPE2).

4. The method according to any of claims 1 to 3, wherein, the first network equipment (CPE1) and the second network equipment (CPE2) using the MPTCP protocol for link aggregation, detecting (52) whether or not data have already undergone a link aggregation operation in or upstream of the first network equipment (CPE1) comprises testing the presence of the "*multipath TCP*" TCP 30 option in the data received in the second network equipment (CPE2).

5. The method according to any of claims 1 to 3, wherein, the first network equipment (CPE1) and the second network equipment (CPE2) using GRE tunnels for link aggregation, detecting whether or not data have already undergone a link aggregation operation in or upstream of the first network equipment (CPE1) comprises testing whether the "protocol" field in the IP header of an IPv4 data packet, or the "next header" field in the last header of an IPv6 data packet, included in data received from the first network equipment, is equal to 47.

6. The method according to any of claims 4 to 5, wherein detecting whether or not data have already undergone a link aggregation operation in or upstream of the first network equipment (CPE1) further comprises checking the interface through which data entered the second network equipment (CPE2) to remove limitations related to the fact that MPTCP or GRE, respectively, can have been used in or upstream of the first network equipment (CPE1) in a context other than link aggregation.

7. The method according to any of the previous claims, wherein detecting (52) whether or not data have already undergone a link aggregation operation in or upstream of the first network equipment (CPE1) comprises comparing the destination IP address of a data packet included in data received from the first network equipment (CPE1) with IP addresses contained in a list of respective IP addresses of a plurality of aggregation points of the data network (20).

8. The method according to any of the previous claims, wherein detecting (52) whether or not data have already undergone a link aggregation operation in or upstream of the first network equipment (CPE1) comprises further testing an identifier, known by the second network equipment (CPE2), of the first network equipment (CPE1) and/or of another device upstream of said first network equipment (CPE1) through which data passed before reaching the second network equipment (CPE2).

9. The method according to claim 8, wherein the identifier of the first network equipment (CPE1) comprises a physical address in the network which is unique to said first network equipment, and is known to the second network equipment (CPE2) either statically or because it is communicated to said second network equipment by a management protocol of the network, and wherein testing the identifier comprises comparing with an interval of physical addresses known to the second network equipment.

10. The method according to any of the previous claims, wherein since data are received from the first network equipment via a Wi-Fi IEEE 802.11 interface of the second network equipment, detecting (52) whether or not data have already undergone a link aggregation operation in or upstream of the first network equipment (CPE1) comprises further testing a specific value in the attribute number 26 of a *probe request* type frame.

11. The method according to any of the previous claims, wherein since the second network equipment (CPE2) acts as a DHCP server towards the first network equipment (CPE1) and data are received by said second network equipment via a public Wi-Fi network, detecting (52) whether or not data have already undergone a link aggregation operation in the first network equipment (CPE1) comprises testing a DHCP option with a predefined value known to the first network equipment and the second network equipment, inserted by the first network equipment (CPE1) when the data are subjected to link aggregation in said first network equipment.

12. A device for routing data received from a first network equipment (CPE1) into a second network equipment (CPE2), each of said first and second network equipments comprising a link aggregation engine (15) implementing a link aggregation technique by using the same aggregation rules to select one from at least a first and a second output links (L1, L2) involved in the link aggregation in said network equipment with:
- an output link (L1) to the other network equipment; and
- at least one other output link (L2) which is capable of reaching an aggregation point (21) in the network (20),
the device comprising, in the second network equipment (CPE2):
i. means for receiving (51) data coming from the first network equipment (CPE1);
ii. means for detecting (52) whether or not the data have already undergone a link aggregation operation in or upstream of the first network equipment (CPE1), based on markers present in the data; and then,
iii. means for selecting (53) an output link (L_{OUT}) from all the output links of the second network equipment (CPE2) involved in link aggregation in said second network equipment if the data have not already undergone link aggregation, or selecting (64) the output link (L_{OUT}) from all the output links of the second network equipment (CPE2) involved in link aggregation in said second network equipment except for the output link (Lᵢ) to the first network equipment (CPE1) if the data have already undergone link aggregation; and,
iv. means for transmitting (55) data over the selected output link (L_{OUT}).

13. A residential gateway (CPE2) comprising a device according to claim 12.

14. A "computer program" product directly loadable into the internal memory of a digital computer, comprising software code portions which, when said program is run by a computer, cause the same to implement all the steps of the method according to any of claims 1 to 11.

15. A data recording medium readable by a machine comprising a processor, comprising the computer program according to claim 14.
